# EUROPÄISCHE PATENTANMELDUNG

(11) **EP 3 438 419 A1**
(43) Veröffentlichungstag der Anmeldung: **06.02.2019**
(21) Anmeldenummer: 18183136.3
(22) Anmeldetag: 12.07.2018
(51) Int. Cl.: F01D 11/24, F02C 7/18

(54) **LUFTFÜHRUNGSVORRICHTUNG IN EINEM FLUGZEUGTRIEBWERK**

(30) Priorität: 31.07.2017 DE 102017117291
(71) Anmelder: Rolls-Royce Deutschland Ltd & Co KG, 15827 Blankenfelde-Mahlow (DE)
(72) Erfinder: VAN DER WOUDE, Matthijs, 15834 Rangsdorf (DE)
(74) Vertreter: Maikowski & Ninnemann Patentanwälte Partnerschaft mbB

(57) **Zusammenfassung**

Die Erfindung betrifft eine Luftführungsvorrichtung in einem Flugzeugtriebwerk für Luft, die von einer Kerntriebwerkswandung (1), die ein Kerntriebwerk (10) umgibt, erhitzt ist, gekennzeichnet durch mindestens eine Luftsperrvorrichtung (3) zur Verhinderung einer axial nach vorne gerichteten Luftströmung im Raum (20) um das Kerntriebwerk (10) und zur Bildung eines Luftkanals (2), der sich mindestens über einen Teil im Raum (20) um das Kerntriebwerk (10) herum erstreckt, wobei sich die Luftsperrvorrichtung (3) und der Luftkanal (2) radial von der Kerntriebwerkswandung (1) nur über einen Teil des Raums (20) erstrecken, der das Kerntriebwerk (10) umgibt, und mindestens eine Luftleitung (5, 5', 5") zu mindestens einer Austrittsöffnung (6), die in einen Bereich mündet, der einen lokal kleineren Druck aufweist als der Druck im Bereich eines Kühlluftspaltes (24) an der Kerntriebwerkswandung (1), wobei die mindestens eine Austrittsöffnung (6) der mindestens einen Luftleitung (5) unmittelbar in den Nebenstromkanal (30) mündet.

## Beschreibung

Die Erfindung betrifft eine Luftführungsvorrichtung in einem Flugzeugtriebwerk mit den Merkmalen des Anspruchs 1.

In Flugzeugtriebwerken liegen Bereiche vor, in denen erhitzte Luft abgeführt werden muss. Ein typisches Beispiel dafür ist eine Kerntriebwerkswandung, die von außen gekühlt wird, um einen Spalt zwischen Rotorschaufeln des Flugzeugtriebwerks und der inneren Seite der Kerntriebwerkswandung im Betrieb einzustellen, d.h. um den Spalt möglichst konstant und klein zu halten. Luftführungsvorrichtungen in diesem Zusammenhang sind z.B. aus der US 2015/0260101 A1 oder der EP 2 224 009 A2 bekannt.

Es besteht die Aufgabe, die Luftführung insbesondere der an der Kerntriebwerkswand erhitzten Luft effizient zu gestalten.

Die Aufgabe wird durch eine Luftführungsvorrichtung mit den Merkmalen des Anspruchs 1 gelöst.

Dabei dient mindestens eine Luftsperrvorrichtung zur Verhinderung einer axial nach vorne gerichteten Luftströmung im Raum um das Kerntriebwerk. Ferner dient die Luftsperrvorrichtung der Bildung eines Luftkanals, der sich mindestens über einen Teil im Raum um das Kerntriebwerk herum erstreckt. In diesem Luftkanal wird z.B. die an der äußeren Seite der Kerntriebwerkswandung erhitzte Kühlluft gesammelt und im Anschluss abgeführt. Dabei erstrecken sich die Luftsperrvorrichtung und der Luftkanal radial von der Kerntriebwerkswandung nicht über den gesamten Umfang des Kerntriebwerks, d.h. sie erstrecken sich nur über einen Teil des Raums, der das Kerntriebwerk umgibt. Mit dem resultierenden vergleichsweise kleinen Querschnitt des Luftkanals und dem Druckgefälle zwischen statischem Druck an der Nebenstromkanalwandung und dem Totaldruck der Strömung im Nebenstromkanal wird lokal im Luftkanal eine entsprechend hohe Strömungsgeschwindigkeit erreicht.

Zur Abführung der erhitzten Luft wird mindestens eine Luftleitung verwendet, die die Luft zu mindestens einer Austrittsöffnung führt, die in einen Bereich mündet, der einen lokal kleineren Druck aufweist als der Druck im Bereich eines Kühlluftspaltes an der Kerntriebwerkswandung. Auf Grund des Druckgradienten fließt die Luft ohne externe Energiezufuhr ab. Die mindestens eine Austrittsöffnung der mindestens einen Luftleitung mündet dabei unmittelbar in den Nebenstromkanal, d.h. sie wird nicht durch die aerodynamische Verkleidung geführt. Damit erhält man eine größere Freiheit in der Wahl des Ortes für die Austrittsöffnung.

In einer Ausführungsform ist der mindestens eine Luftkanal als Ringkanal ausgebildet. Dies bedeutet, dass die erhitzte Luft ringförmig um das Kerntriebwerk herum geführt wird, wobei es nicht zwingend ist, dass der Querschnitt des Luftkanals konstant ist. Vielmehr kann sich der Querschnitt des Luftkanals den konstruktiven Gegebenheiten im Flugzeugtriebwerk anpassen. Ringförmig kann in diesem Zusammenhang auch bedeuten, dass der Luftkanal sich über den ganzen Umfang des Kerntriebwerkes erstreckt.

Zur Minimierung von Wirbeln oder einer gezielten Steuerung der Luft kann in einer weiteren Ausführungsform die mindestens eine Austrittsöffnung der Luftleitung mit mindestens einer Leitvorrichtung, insbesondere einem Leitblech und / oder einer Düse, gekoppelt sein.

In einer weiteren Ausführungsform verläuft die mindestens eine Luftleitung mindestens teilweise durch eine aerodynamische Verkleidung zwischen dem Kerntriebwerk und dem Nebenstromkanal. Solche aerodynamischen Verkleidungen decken üblicherweise Kabel und / oder Leitungen ab, die durch einen durchströmten Bereich - z.B. dem Nebenstromkanal - geführt werden. Dabei kann z.B. die mindestens eine Austrittsöffnung seitlich an der aerodynamischen Verkleidung, insbesondere an der Stelle mit der größten Breite der aerodynamischen Verkleidung, angeordnet sein. Auf diese Art und Weise würde der lokale Druckabfall zur Förderung der erhitzten Abluft besonders effizient genutzt werden.

Auch ist es möglich, dass die mindestens eine Austrittsöffnung der mindestens einen Luftleitung unmittelbar in einen Umgebungsraum des Flugzeugtriebwerks mündet. Damit verringert sich die aerodynamische Lauflänge der mindestens einen Luftleitung, was einen geringeren Luftwiderstand und einer effektiv höheren Massenstrom bei gleichem Druckgefälle ermöglicht. Bei mehreren radial nach außen führenden Luftleitungen kann die anfallende Kühlluft noch effektiver abgeführt werden.

Ferner ist es auch möglich, dass die mindestens eine Austrittsöffnung der mindestens einen Luftleitung in den Bereich außerhalb der Austrittsdüse in Strömungsrichtung des Flugzeugtriebwerks mündet. Auch ist es möglich, dass die mindestens eine Austrittsöffnung) der mindestens einen Luftleitung in den Bereich der Austrittsfläche der aerodynamischen Verkleidung des Flugzeugtriebwerks oder etwas darüber hinaus mündet. Damit würde die austretende Luft einen minimalen Beitrag zum Schub des Flugzeugtriebwerkes leisten und der Verlust der abgezapften durch den Fan verdichteten Luft im Nebenstromkanal zumindest teilweise verringert werden.

Für eine flexible Einstellung der Kühlung können in einer Ausführungsform mindestens zwei Luftleitungen erhitzte Kühlluft aus unterschiedlichen Bereichen der Kerntriebwerkswandung abführen.

Die Luftmenge in der mindestens einen Luftleitung kann durch ein steuerbares Ventil eingestellt werden. Dabei sind in einer ausführbaren Ausführungsform das steuerbare Ventil, eine Ventilsteuerung und / oder ein Stellelement im Bereich einer Gondel des Flugzeugtriebwerkes angeordnet, da dort, verglichen mit der Kerntriebwerkswandung, vergleichswiese geringe Temperaturen herrschen.

Damit ist es grundsätzlich möglich, dass mittels des steuerbaren Ventils die Kühlluftabfuhr von der Kerntriebwerkswandung zur Einstellung der Größe eines Spaltes zwischen Rotoren und der Kerntriebwerkswandung steuerbar oder regelbar ist.

In einer weiteren Ausführungsform ist die mindestens eine Luftsperrvorrichtung aus einzelnen Segmenten gebildet, da sich diese effizient montieren lassen.

Im Zusammenhang mit den in den Figuren dargestellten Ausführungsbeispielen wird die Erfindung erläutert. Dabei zeigt
- Fig. 1: eine schematische axiale Schnittansicht einer Ausführungsform einer Luftführungsvorrichtung;
- Fig. 2: eine schematische axiale Schnittansicht einer Ausführungsform einer Luftführungsvorrichtung mit einer Luftleitung zu einem Nebenstromkanal;
- Fig. 3: eine schematische axiale Schnittansicht einer Ausführungsform einer Luftführungsvorrichtung mit einer Luftleitung zu einem Nebenstromkanal, wobei die Austrittsöffnung der Luftleitung in Strömungsrichtung geneigt ist;
- Fig. 4: eine schematische axiale Schnittansicht einer Ausführungsform einer Luftführungsvorrichtung mit einer Luftleitung (mit zwei Zuleitungen) zu einem Nebenstromkanal;
- Fig. 5: eine schematische axiale Schnittansicht einer Ausführungsform einer Luftführungsvorrichtung mit einer Luftleitung (mit zwei Zuleitungen) zu einem Nebenstromkanal, wobei die Austrittsöffnung der Luftleitung in Strömungsrichtung geneigt ist;
- Fig. 6A: eine schematische Schnittansicht einer Austrittsöffnung einer Luftleitung;
- Fig. 6B: eine schematische Schnittansicht einer Austrittsöffnung einer Luftleitung mit einer Leitvorrichtung;
- Fig. 7: eine schematische Schnittansicht einer weiteren Ausführungsform einer Luftführungsvorrichtung mit einer unmittelbaren Einleitung der Luft in den Nebenstromkanal;
- Fig. 8: eine schematische Schnittansicht einer weiteren Ausführungsform einer Luftführungsvorrichtung mit einer unmittelbaren Einleitung der Luft in den Nebenstromkanal über zwei Luftleitungen;
- Fig. 9: eine schematische Schnittansicht einer weiteren Ausführungsform einer Luftführungsvorrichtung mit einer Einleitung der Luft in einen Umgebungsbereich einer Gondel des Flugzeugtriebwerkes;
- Fig. 10: eine schematische Schnittansicht einer weiteren Ausführungsform einer Luftführungsvorrichtung mit einer Einleitung der Luft in den Umgebungsbereich der Gondel des Flugzeugtriebwerkes mit einer axial hinten liegenden Luftzufuhr;
- Fig. 11: eine schematische Schnittansicht einer weiteren Ausführungsform einer Luftführungsvorrichtung mit einer Einleitung der Luft in den Umgebungsbereich der Gondel des Flugzeugtriebwerkes mit zwei Luftleitungen mit Ventilsteuerungen;
- Fig. 12: eine schematische Schnittansicht einer weiteren Ausführungsform einer Luftführungsvorrichtung mit einer Einleitung der Luft in den Umgebungsbereich der Gondel des Flugzeugtriebwerkes mit zwei zusammengeführten Luftleitungen mit Ventilsteuerungen;
- Fig. 13: eine schematische Schnittansicht einer weiteren Ausführungsform einer Luftführungsvorrichtung mit einer Einleitung der Luft in den Umgebungsbereich der Gondel des Flugzeugtriebwerkes mit einer Luftleitung zur Abführung erhitzter Luft aus einem axial hinteren Bereich mit einer Ventilsteuerung;
- Fig. 14: eine schematische Schnittansicht einer weiteren Ausführungsform einer Luftführungsvorrichtung mit einer Einleitung der Luft in den Umgebungsbereich der Gondel des Flugzeugtriebwerkes mit einer Luftleitung zur Abführung erhitzter Luft aus einem axial hinteren Bereich mit einer Ventilsteuerung und einem NACA-Lufteinlass im Nebenstromkanal;
- Fig. 15: eine schematische Schnittansicht einer weiteren Ausführungsform einer Luftleitvorrichtung mit einer Auslassöffnung für erhitzte Luft an der Austrittsfläche der aerodynamischen Verkleidung (Splitter-Fairing) des Flugzeugtriebwerks;
- Fig. 16: eine schematische Schnittansicht einer weiteren Ausführungsform einer Luftleitvorrichtung mit einer Auslassöffnung für erhitzte Luft etwas hinter der Austrittsfläche der aerodynamischen Verkleidung (Splitter-Fairing) des Flugzeugtriebwerks
- Fig. 17: eine schematische Schnittansicht einer weiteren Ausführungsform einer Luftleitvorrichtung mit zwei Teilleitungen für die Aufnahme erhitzter Luft mit einer Auslassöffnung für erhitzte Luft an der Austrittsfläche der aerodynamischen Verkleidung (Splitter-Fairing) des Flugzeugtriebwerks;
- Fig. 18: eine schematische Schnittansicht einer weiteren Ausführungsform einer Luftleitvorrichtung mit zwei Teilleitungen für die Aufnahme erhitzter Luft mit einer Auslassöffnung für erhitzte Luft an der Austrittsfläche der aerodynamischen Verkleidung (Splitter-Fairing) des Flugzeugtriebwerks und steuerbaren Ventilen.

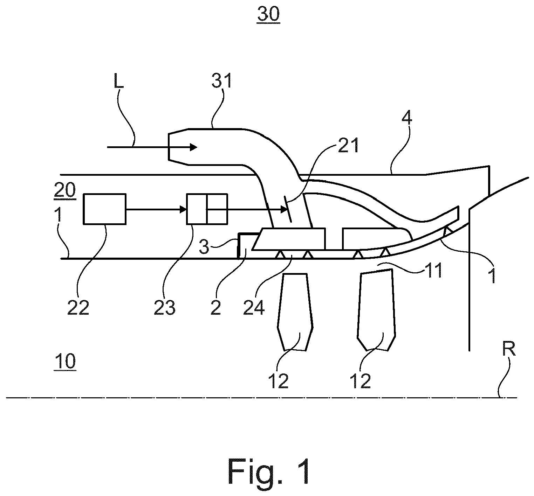

In Fig. 1 ist in schematischer Weise ein Teil eines an sich bekannten Flugzeugtriebwerks dargestellt. Aus Gründen der Übersichtlichkeit sind hier nur zwei Rotorschaufeln 12 einer Turbine im Kerntriebwerk 10 dargestellt. Die Rotorschaufeln 12 drehen sich um die Rotationsachse R.

Die Schuberzeugung im Flugzeugtriebwerk erfolgt zum einen durch einen Heißgasstrahl des Kerntriebwerks 10 (Primärkreis) und zum anderen durch einen zweiten, um das Kerntriebwerk - im Bypass - herumgeführten Kaltluftstrahl (Sekundärkreis), der im Nebenstromkanal 30 verläuft. Bei zivilen Nebenstrom-Triebwerken ist der Sekundärkreis für den größten Schubanteil verantwortlich. Zwischen Kerntriebwerk 10 und dem Nebenstromkanal 30 ist ein Raum 20 angeordnet, der das Kerntriebwerk 10 umgibt. In diesem Raum sind u.a. Luftführungsmittel wie ein Kühlluftspalt 24 angeordnet, die u.a. der Kühlung einer Kerntriebwerkswandung 1 dienen.

Zwischen den Spitzen der Rotorschaufeln 12 und der Kerntriebwerkswandung 1 liegt ein Spalt 11. Die Größe des Spaltes 11 wird in an sich bekannter Weise durch eine Zufuhr an Kühlluft L in dem Bereich der Kerntriebwerkswandung 1 gesteuert oder geregelt (active tip clearance control).

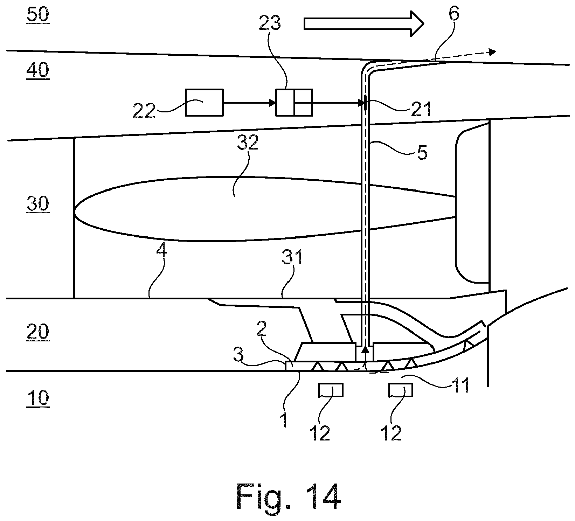

Die Kühlluft L wird dabei in der dargestellten Ausführungsform durch einen Lufteinlass 31 aus dem Nebenstromkanal 30 entnommen. In der Ausführungsform gemäß Fig. 1 ist der Lufteinlass 31 in Form eines Stutzens ausgebildet, der in den Nebenstromkanal hineinragt. In alternativen Ausführungsformen (siehe z.B. Fig. 14) kann z.B. auch ein NACA-Einlauf verwendet werden.

Die Luft L wird radial nach innen in Richtung der zu kühlenden Kerntriebwerkswandung 1 geführt. Die Luftmenge wird dabei über ein Ventil 21 gesteuert. Die Stellung des Ventils 21 - und damit der Luftstrom in das Innere des mindestens einen um das Kerntriebwerk angeordneten Kühlluftverteilungsringkanal - wird über ein Stellelement, hier einen Motor 23, eingestellt. Das Stellelement 23 erhält seine Steuerbefehle über eine Ventilsteuerung 22. In alternativen Ausführungsformen können auch andere Ventilformen oder Stelleinrichtungen verwendet werden.

Die Kühlluft gelangt nachfolgend in einen Kühlluftspalt 24, der die Kerntriebwerkswandung 1 mindestens teilweise umgibt. Durch konvektive Luftkühlung der Kerntriebwerkswandung 1 kann die Größe des Spaltes 11 eingestellt werden.

Im Folgenden werden Ausführungsformen von Luftführungsvorrichtungen beschrieben, mit denen die im Kühlluftspalt 24 erhitzte Luft effizient abführbar ist.

In der in Fig. 1 dargestellten Ausführungsform einer Luftführungsvorrichtung dient ein Luftkanal 2, der sich mindestens über einen Teil im Raum 20 um das Kerntriebwerk 10 herum erstreckt, der Sammlung der erhitzten Kühlluft. Dieser Luftkanal 2 kann als Ringkanal ausgebildet sein, d.h. er kann sich um das Kerntriebwerk 10 herum erstrecken. Dieser Luftkanal 2 dient der Aufnahme und Abfuhr von Luft, die an der Kerntriebwerkswandung 1 erhitzt wurde.

In der dargestellten Ausführungsform wird der Luftkanal 2 auf einer Seite von einer Luftsperrvorrichtung 3 zur Verhinderung einer axial nach vorne gerichteten Luftströmung im Raum 20 um das Kerntriebwerk 10 gebildet, wobei sich die Luftsperrvorrichtung 3 radial von der Kerntriebwerkswandung 1 nur über einen Teil des Raums 20 erstreckt, der das Kerntriebwerk 10 umgibt. Damit wird der Raum für die erhitzte Luft gezielt verkleinert, da die Luftsperrvorrichtung 3, und damit der Ringkanal 2, sich radial eben nicht über die ganze Höhe des Raums 20 um das Kerntriebwerk 10 erstrecken Das kleinere Volumen führt zwangsläufig zu einer höheren Strömungsgeschwindigkeit der erhitzten Luft beim Abströmen. Durch die Luftsperrvorrichtung 3 wird eine fluidische und auch eine thermische Trennung des Raumes 20 vom Luftkanal 2 und dem - in Hauptströmungsrichtung gesehen - dahinterliegenden Raum erreicht.

Die Luftsperrvorrichtung 3 kann entlang des Umfangs des Flugzeugtriebwerks aus einzelnen Segmenten gebildet sein, was die Montage erleichtert.

In der dargestellten Ausführungsform sind der Luftkanal 2 und die Luftsperrvorrichtung 3 aus Metall hergestellt. Aus Gründen der Übersichtlichkeit ist in der Fig. 1 nur ein Luftkanal 2 dargestellt. In anderen Ausführungsformen können die Geometrie des Querschnitts und / oder die räumliche Ausrichtung des Luftkanals 2 und / oder der Luftsperrvorrichtung 3 anders ausgebildet sein.

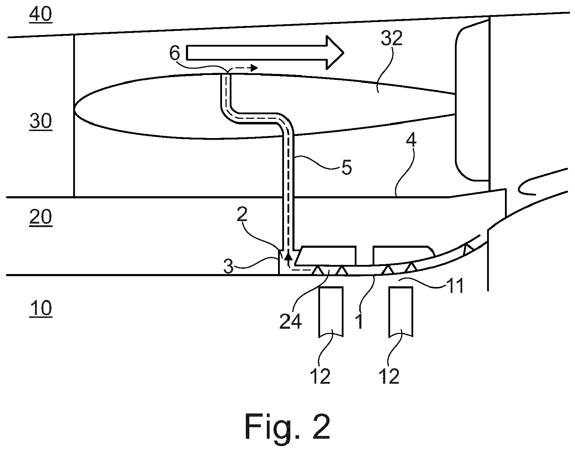

In der Fig. 2 ist eine weitere Ausführungsform einer Luftleitungsvorrichtung dargestellt, wobei die grundsätzliche Anordnung im Bereich des Raums 20 um das Kerntriebwerk 10 der Ausführungsform gemäß Fig. 1 entspricht, so dass auf die entsprechende Beschreibung Bezug genommen werden kann.

Bei der Ausführungsform gemäß Fig. 2 ist im Nebenstromkanal 30 eine radial von innen nach außen führende aerodynamische Verkleidung 32 angeordnet, deren Querschnitt in der Darstellung der Fig. 2 um 90° gedreht abgebildet ist. Diese an sich aus dem Stand der Technik bekannte aerodynamische Verkleidung 32 dient der strömungsgünstigen Abdeckung von Verbindungen und Leitungen zwischen dem Kerntriebwerk 10 und einer Gondel 40, die das Flugzeugtriebwerk außen umgibt. Die Luftströmung im Nebenstromkanal 30 ist in Fig. 2 (wie auch in den folgenden Figuren) durch einen großen Pfeil angedeutet.

Der Bereich, der von der Luftsperrvorrichtung 3 begrenzt wird, weist eine Luftleitung 5 zum Nebenstromkanal 30 auf. Die Luftleitung 5 verläuft dabei ganz oder teilweise durch die aerodynamische Verkleidung 32. Der Austritt der erhitzten Luft in den Nebenstromkanal 30 erfolgt hier über eine Austrittsöffnung 6 auf der Seite der aerodynamischen Verkleidung 32. Dabei kann die Austrittsöffnung 6 insbesondere an der Stelle der größten Bereite der aerodynamischen Verkleidung angeordnet sein. An dieser Stelle ist die lokale Strömungsgeschwindigkeit im Nebenstromkanal 30 am höchsten und somit der lokale statische Druck am geringsten. Grundsätzlich kann die Austrittsöffnung aber auch an einer anderen Stelle der aerodynamischen Verkleidung 32 angeordnet sein, bevorzugt hinter der genannten Stelle, da dort der Einfluss der ausströmenden Kühlluft einen geringeren Einfluss auf den Nebenstrom hat und ihn so weniger stört. Auch wenn der lokale statische Druck dort etwas höher sein sollte, so ist er immer noch geringer als im Kühlluftspalt 24 um die Kerntriebwerkswandung 1, was als treibendes Druckgefälle der Kühlluft ausreicht.

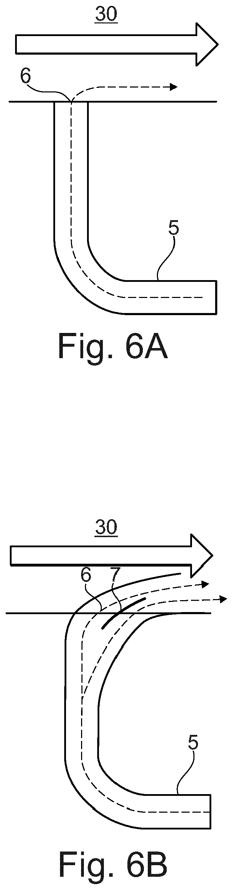

In der dargestellten Ausführungsform ist der ausströmende Luftstrom in einer einfachen Ausführung im Wesentlichen orthogonal zur Strömung durch den Nebenstromkanal 30. Dies ist im Detail in Fig. 6A dargestellt. Der Bereich der Austrittsöffnung 6 liegt dabei in einem Bereich mit einem geringeren statischen Druck als im Kühlluftspalt 24 am Kerntriebwerk 10, so dass die erhitzte Kühlluft unter Einfluss des Druckgradienten abfließen kann.

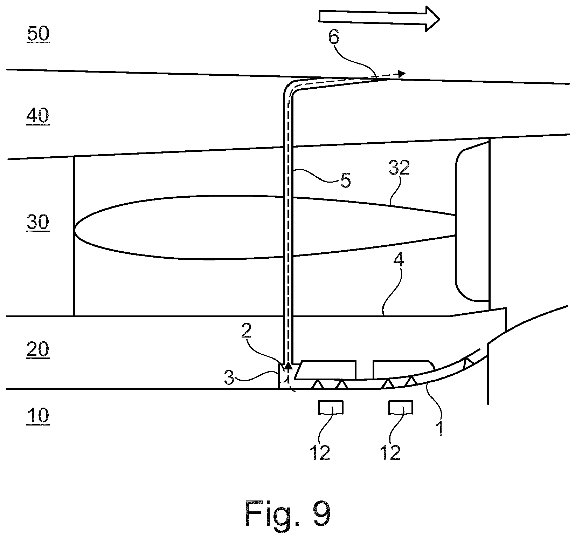

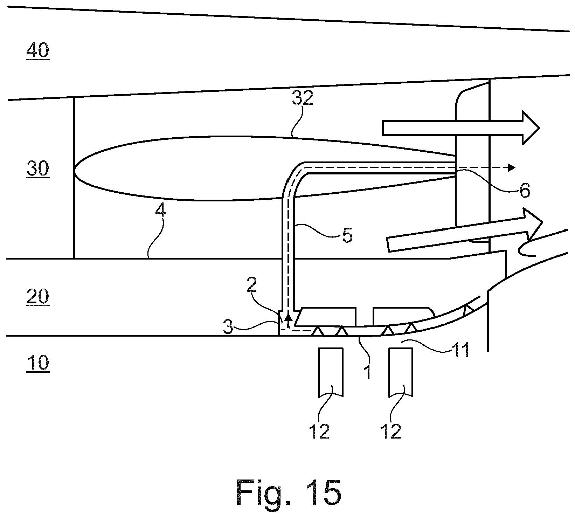

Der Bereich des geringeren statischen Drucks kann z.B. im Bereich des Nebenstromkanals 30 (siehe Fig. 2 bis 8), im Umgebungsbereich 50 der Gondel 40 des Flugzeugtriebwerks (siehe Fig. 9 bis 14) und / oder im Austrittsbereich der aerodynamischen Verkleidung 32 (siehe Fig. 15 bis 18) liegen.

Grundsätzlich ist der statische Luftdruck z.B. im Nebenstromkanal 30 kleiner als der statische Druck im Inneren des Kühlluftspalts, so dass der Luftstrom ohne Zuführung von externer Energie abgeführt werden kann. Der Luftstrom im Nebenstromkanal 30 kann auch dazu dienen, lokal an der Austrittsöffnung 6 einen Unterdruck zu erzeugen (Bernoulli-Effekt), so dass die heiße Luft schneller in den Nebenstromkanal 30 gesaugt werden kann. Tatsächlich ist hier jedoch das treibende Druckgefälle der Abzapfung des Kühlluftstroms als Totaldruck mit kinetischem Anteil zum statischen Druck orthogonal zum Nebenstrom zu sehen.

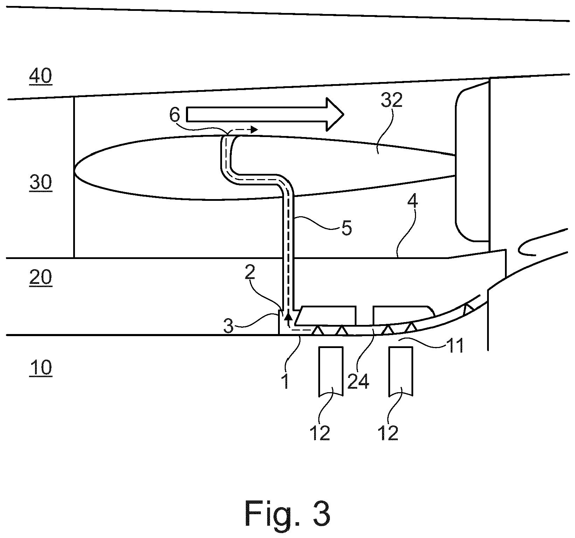

In Fig. 3 ist eine Variation der Ausführungsform der Fig. 2 dargestellt, so dass auf die entsprechende Beschreibung Bezug genommen werden kann.

Die Austrittsöffnung 6 der Luftleitung 5 ist hier in Richtung der Luftströmung im Nebenstromkanal 32 geneigt. Diese mögliche Variation der in Fig. 6A gezeigten einfachsten Lösung ist in Fig. 6B dargestellt. Diese Ausführungsform bezweckt einen geringeren ungünstigen Einfluss auf die Strömungseffizienz des Nebenstroms.

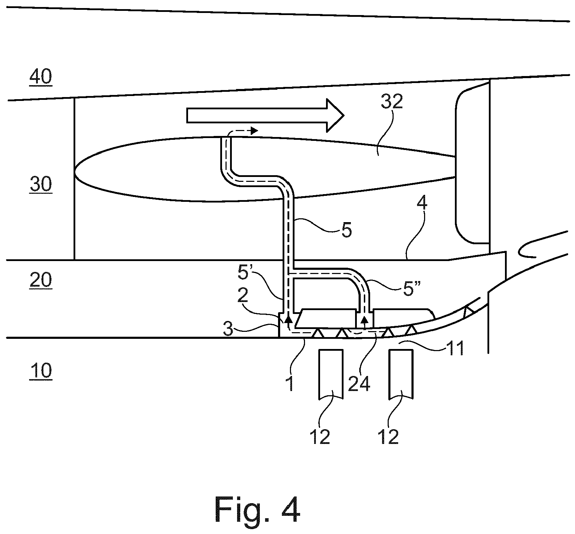

In Fig. 4 ist eine Abwandlung der Ausführungsform gemäß Fig. 2 dargestellt. In Ergänzung zu der Luftleitung 5 der Ausführungsform gemäß Fig. 2, weist die Luftleitung 5 zwei Teilleitungen 5', 5" auf, die erhitzte Luft aus unterschiedlichen Teilen des Kühlluftspaltes 24 in den Nebenstromkanal 32 führen. Eine erste Teilleitung 5' führt erhitzte Luft aus dem Bereich der Luftsperrvorrichtung 3 in die Luftleitung 5. Eine zweite Teilleitung 5" führt erhitzte Luft aus einem axial weiter hinten liegenden Teil des Kühlluftspaltes 24 in die Luftleitung 5.

Die Auslassöffnung 6 der Luftleitung in den Nebenstromkanal 32 ist hier im Wesentlichen rechtwinklig zur Strömung im Nebenstromkanal 30 angeordnet, wie dies auch in Fig. 6A dargestellt ist.

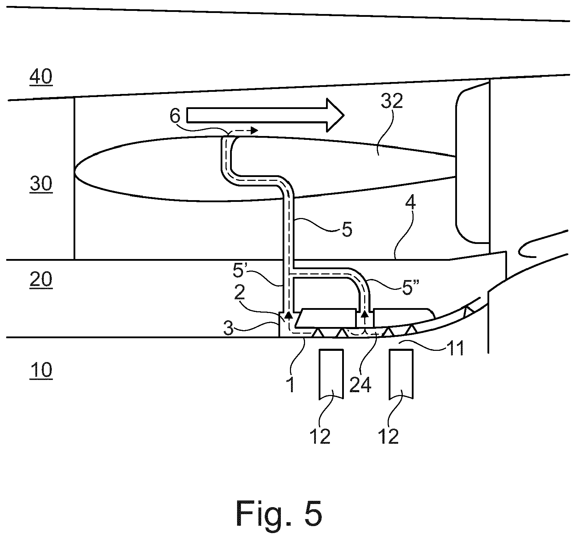

Die Ausführungsform gemäß Fig. 5 variiert diese Lösung, indem die Austrittsöffnung 6 - wie bei der Ausführungsform gemäß Fig. 3 - in Richtung der Luftströmung im Nebenstromkanal 30 geneigt ist, wie dies in Fig. 6B dargestellt ist.

In Fig. 6A und 6B sind Austrittsöffnungen der Luftleitung 5 in den Nebenstromkanal 30 im Detail dargestellt.

In Fig. 6A ist die Situation dargestellt, in der die erhitzte Luft im Wesentlichen senkrecht zur Strömung im Nebenstromkanal 30 einströmt.

In der Ausführungsform gemäß Fig. 6B ist die Austrittsöffnung 6 in Richtung der Strömung im Nebenstromkanal 30 ausgerichtet, wobei hier zusätzlich noch eine Leitvorrichtung 7 in der Austrittsöffnung 6 angeordnet ist, die die ausströmende Luft in die Strömung des Nebenstromkanals 30 führt. Damit können unerwünschte Verwirbelungen verringert werden. In alternativen Ausführungsformen kann die Leitvorrichtung 7 auch die Form eines axial nach hinten gerichteten Stutzens aufweisen.

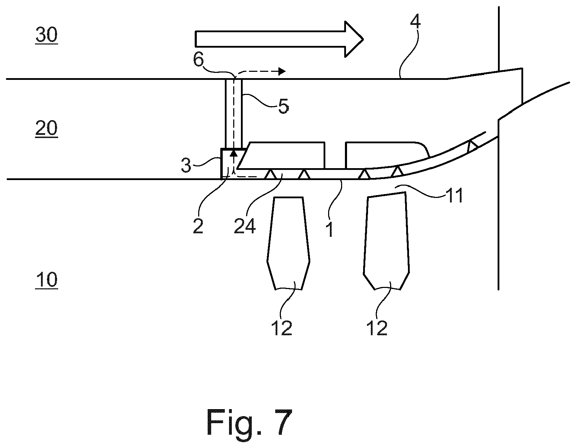

In Fig. 7 ist eine weitere Ausführungsform einer Luftleitvorrichtung dargestellt. Anders als z.B. in der Ausführungsform gemäß Fig. 2 wird hier die erhitzte Luft durch beispielsweise die radial nach außen zur Kerntriebwerksverkleidung 4 (Fairing) führende mindesten einen Luftleitung 5 unmittelbar in den Nebenstromkanal 30 geführt und nicht durch die aerodynamische Verkleidung 32. Das grundsätzliche Prinzip der Luftführung von der Kerntriebwerkswandung 1 zum Nebenstromkanal 30 ist jedoch analog zu den Ausführungsformen der Fig. 2 bis 5. Auch hier liegt ein lokal tieferer statischer Druck vor als im Kühlluftspalt 24 um die Kerntriebwerkswandung 1. Der tiefste statische Druck liegt in dem Bereich vor, in dem die Strömungsgeschwindigkeit am höchsten ist und die Leitung 5 kann dorthin geführt werden.
+

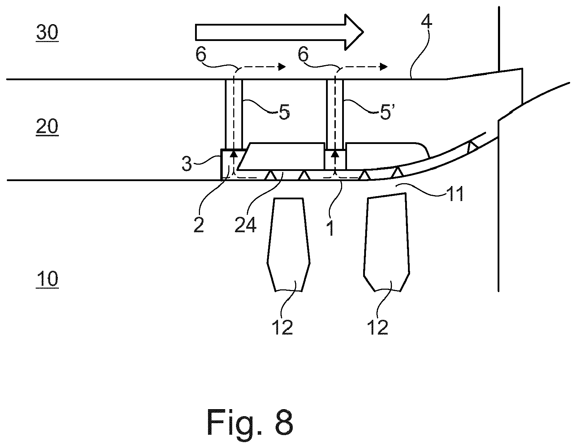

Außerdem kann die Austrittsöffnung entweder wie in Fig. 6A oder wie in Fig. 6B dargestellt ausgeführt werden, was auch für die nachfolgende Fig. 8 gilt.

In Fig. 8 ist eine Abwandlung der Ausführungsform gemäß der Fig. 7 dargestellt. Anstelle einer einzigen Luftleitung 5, werden hier zwei Luftleitungen 5 eingesetzt, um von der Kerntriebwerkswandung 1 erhitzte Luft unmittelbar in den Nebenstromkanal 30 zu führen. Die erste Luftleitung 5 führt dabei Luft aus dem Bereich der Luftsperrvorrichtung 3, die zweite axial weiter hinten liegende Luftleitung 5 führt erhitzte Luft aus einem entsprechend hinteren Bereich des Flugzeugtriebwerks in den Nebenstromkanal 30.

In Fig. 9 ist eine weitere Ausführungsform der Luftleitvorrichtung dargestellt, wobei die Luftführung im Bereich der Kerntriebwerkswandung 1 analog zu den bereits geschilderten Ausführungsformen ausgebildet ist, wobei die erhitzte Kühlluft im Bereich der axial vorne liegenden Luftsperrvorrichtung 3 in die Luftleitung 5 geführt wird.

Wie bei den Ausführungsformen der Fig. 2 bis 5 durchquert die Luftleitung 5 auch hier eine aerodynamische Verkleidung 32, wobei die Austrittsöffnung 6 der Luftleitung 5 hier aber an der Außenseite der Gondel 40 angeordnet ist, d.h., sie ist in den Umgebungsraum 50 (freie Strömung um das Flugzeugtriebwerk) der Gondel 40 gerichtet. Die Austrittsöffnung 6 ist dabei nach hinten, d.h. im Wesentlichen in Richtung der Luftströmung (Pfeil) im Umgebungsraum 50, gerichtet. Damit werden Verwirbelungen reduziert. Hier wird in Kauf genommen, dass die abgeführte Luft aus dem Nebenstrom des Triebwerks entzogen wird, die letztlich dem Vortrieb verloren geht, wobei aber der Unterdruck im Umgebungsraum 50 im Betrieb des Flugzeugtriebwerks besonders groß ist.

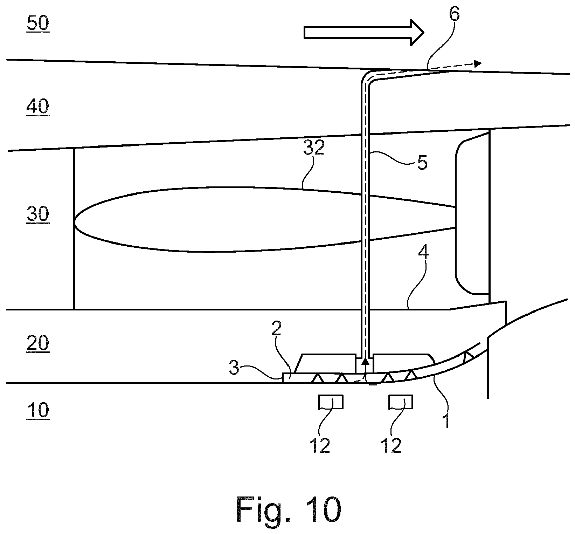

In Fig. 10 ist eine Abwandlung der Ausführungsform der Luftleitvorrichtung gemäß Fig. 9 dargestellt, wobei hier die erhitzte Kühlluft von einer Stelle axial weiter hinten im Flugzeugtriebwerk zum Umgebungsbereich 50 der Gondel 40 abgeführt wird. Auch diese Stelle der Absaugung kann bei den vorangegangenen Ausführungsformen angewandt werden, bei der die vorderen Luftleitungen 5 im Ringkanal 2 alternativ entfallen könnten.

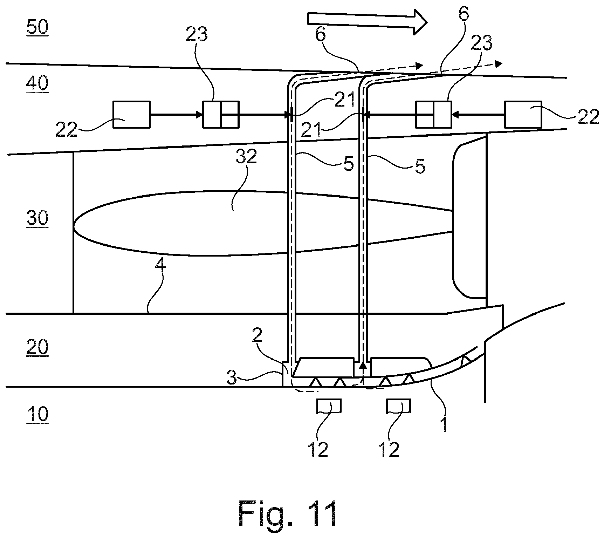

In Fig. 11 ist eine weitere Abwandlung der Ausführungsformen der Luftleitvorrichtungen gemäß Fig. 9 und 10 dargestellt, d.h. die erhitzte Kühlluft wird in den Umgebungsbereich 50 der Gondel 40 geführt. Im Unterschied zu den anderen Ausführungsformen werden in dieser Ausführungsform aber zwei getrennte Luftleitungen 5 eingesetzt, die an zwei Stellen die erhitzte Kühlluft aufnehmen: einmal vorne im Bereich der Luftsperrvorrichtung 3 und einmal axial in einem weiter hinten liegenden Bereich. Zusätzlich enthält diese Ausführungsform noch Ventile 21 in den Luftleitungen 5, die durch Ventilsteuerungen 22 und Stellelemente 23 (Motoren) angesteuert werden. Die Ventile 21, die Ventilsteuerung 22 und die Stellelemente 23 sind hier im relativ kühlen Bereich der Gondel 40 angeordnet und könnten anstelle des im Heißbereich liegenden Ventils 21 in Fig. 1 gewählt werden, so dass die Kühlluftströmung am Austritt reguliert würde und die Kühlluftzufuhrleitungen dauerhaft totaldruckbeaufschlagt wären.

Es ist auch möglich, dass nur eine der Kühlleitungen 5 mit einem steuerbaren Ventil 21 versehen ist. In jedem Fall ist es damit möglich, eine flexible Steuerung oder Regelung des Spaltes 11 zwischen den Rotorschaufeln 12 und der Kerntriebwerkswandung 1 durchzuführen.

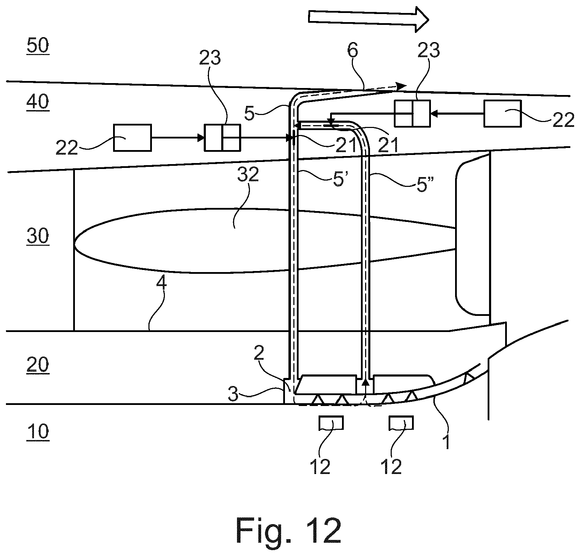

Fig. 12 zeigt eine weitere Variation der Ausführungsformen der Luftleitungseinrichtungen gemäß Fig. 9, 10 und 11. Wie bei der Ausführungsform gemäß Fig. 11 wird hier die erhitzte Kühlluft aus zwei Bereichen der Kühlluftspalte 24 an der Kerntriebwerkswandung 1 durch Teilluftleitungen 5', 5" abgeführt. Die Teilluftleitungen 5', 5" werden im Bereich der Gondel 40 zusammengeführt, so dass nur noch eine Luftleitung 5 die erhitzte Kühlluft zur Austrittsöffnung 6 führt, so dass die Luft letztlich in den Umgebungsbereich 50 der Gondel 40 abgeführt wird.

In den beiden Teilluftleitungen 5', 5" sind jeweils steuerbare Ventile 21 angeordnet. Wie bei der Ausführungsform gemäß Fig. 11 ist es damit möglich, den einzelnen Bereichen der Kerntriebwerkswandungen 1 unterschiedliche Mengen an erhitzter Kühlluft zu entziehen, um eine unterschiedliche und gezielte Kühlung unterschiedlicher Bereiche Kerntriebwerkswandung 1 zu erreichen.

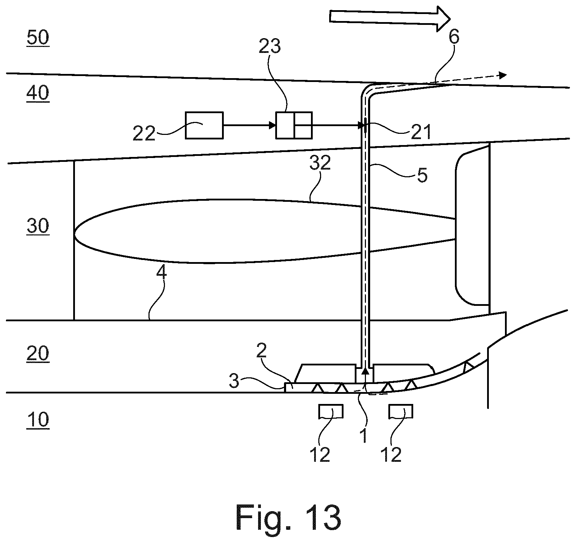

In Fig. 13 ist eine Variation der Ausführungsform gemäß Fig. 10 dargestellt, wobei hier die erhitzte Kühlluft nur im axial hinteren Teil des Kühlluftspaltes 24 aufgenommen wird und in den Umgebungsbereich 50 der Gondel 40 geführt wird. Die Luftmenge in der Luftleitung 5 ist dabei über ein Ventil 21 steuerbar.

In Fig. 14 ist eine weitere Abwandlung der Ausführungsform gemäß Fig. 13 und Fig. 1 dargestellt. Hier ist ein NACA-Scoop als Lufteinlass 13 vorgesehen, um die Kühlluft in das Innere der Kühlluftverteilringe zur Kerntriebwerkswandung 1 zu bringen. Die an der Kerntriebwerkswandung 1 erhitzte Kühlluft wird dann wieder im axial hinteren Bereich der Kerntriebwerkswandung 1 gesammelt und aufgenommen und über die Luftleitung 5 in den Umgebungsbereich 50 der Gondel 40 geleitet. Die Kühlluft ist mittels eines Ventils 21 steuerbar.

In Fig. 15 bis 17 werden Ausführungsformen einer Luftleitvorrichtung dargestellt, bei denen die Austrittsöffnung 6 einer Luftleitung 5 am hinteren Ende der aerodynamischen Verkleidung 32 abgeordnet ist. Somit strömt die erhitzte Kaltluft koaxial in Totwassergebiet der aerodynamischen Verkleidung 32 mit der Strömung im Nebenstromkanal 30. Damit werden zusätzliche Strömungsverluste minimiert. Durch Rückführung der abgesaugten Luft zurück in den Nebenstromkanal bleibt die Gesamtmassenstrombilanz gleich und wird noch ein geringer Beitrag zum Schub des Flugzeugtriebwerks geleistet, bzw. die zunächst verdichtet Luft nicht aus dem Kreisprozess entnommen, wie es in den Ausführungsformen der Fig. 9 bis 14 der Fall ist.

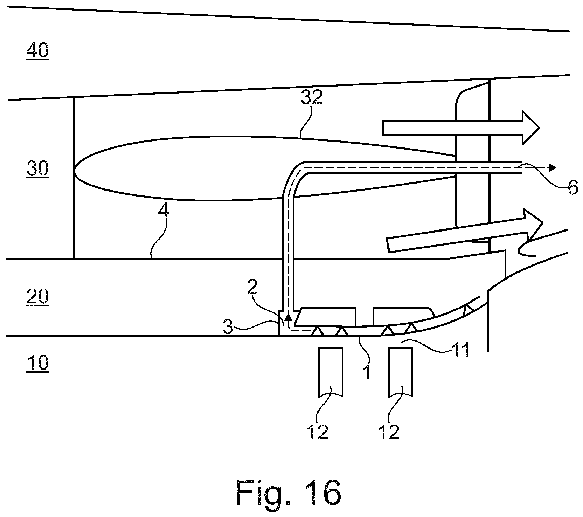

In der Ausführungsform gemäß der Fig. 16 wird die erhitzte Kühlluft im Bereich der Luftsperrvorrichtung 3 durch die Luftleitung 5 etwas hinter die Austrittsfläche der aerodynamischen Verkleidung 32 abgeführt, wo der statische Druck etwas geringer als in der Austrittsfläche ist.
Figur 15 zeigt die Ausführungsform, bei der die erhitzte Kühlluft im Bereich der Luftsperrvorrichtung 3 durch die Luftleitung 5 in die Austrittsfläche der aerodynamischen Verkleidung 32 abgeführt wird, wo der statische Druck etwas höher ist als hinter der Austrittsfläche. In den Ausführungsformen gemäß Fig. 16 bis 18 sind die Austrittsöffnungen 6 weiter hinten angeordnet, so dass eine etwas effektivere Absaugung möglich ist.

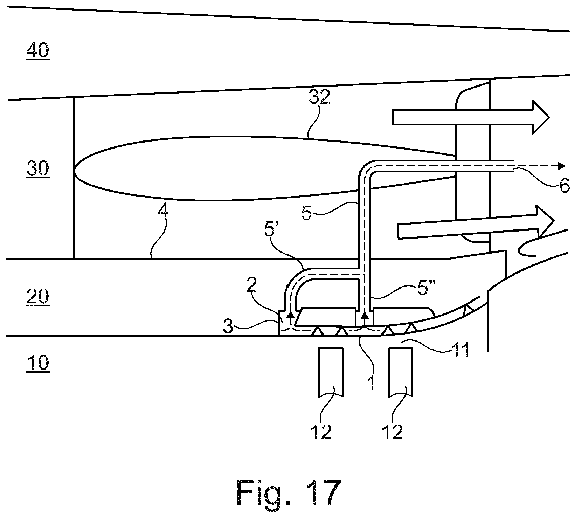

In der Ausführungsform gemäß Fig. 17 vereinigen sich zwei Teilleitungen 5', 5" zu einer Luftleitung 5. Diese können jedoch auch einzeln ausgeführt und an unterschiedlichen Stellen der Austrittsfläche der aerodynamischen Verkleidung 32 oder etwas dahinter geführt werden, was nicht dargestellt ist.

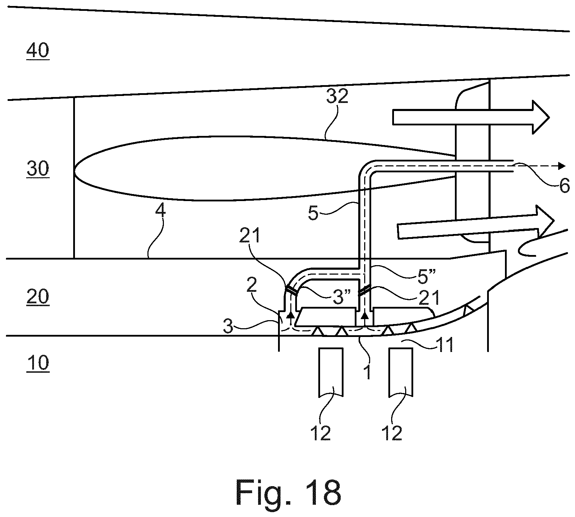

In den Ausführungsformen gemäß Fig. 15 bis 17 wurden die Luftleitungen 5 (und auch die Teilleitungen 5', 5") jeweils ohne Ventile 21 dargestellt. Grundsätzlich können z.B. auch die Teilleitungen 5', 5" mit steuerbaren Ventilen 21 ausgestattet werden, wie dies beispielhaft für die Ausführungsform der Fig. 18 dargestellt ist. Aus Gründen der Übersichtlichkeit sind hier die Ventilsteuerungen 22 und Motoren 23 nicht dargestellt.

Es sei darauf hingewiesen, dass in alternativen Ausführungsformen unterschiedliche Führungen der Luftkanäle 5 und deren Austrittsöffnungen 6 miteinander kombiniert werden können. So ist es z.B. möglich, einen Luftkanal 5 im Nebenstromkanal 30 enden zu lassen, einen weiteren Luftkanal 5 im Bereich der Austrittsfläche der aerodynamischen Verkleidung 32.

### Bezugszeichenliste

- 1: Kerntriebwerkswandung
- 2: Luftkanal
- 3: Luftsperrvorrichtung
- 4: Kerntriebwerksverkleidung
- 5: Luftleitung
- 5', 5": Teilleitungen der Luftleitung
- 6: Austrittsöffnung der Luftleitung
- 7: Leitvorrichtung

- 10: Kerntriebwerk
- 11: Spalt
- 12: Rotorschaufeln

- 20: Raum das Kerntriebwerk umgebend
- 21: Ventil
- 22: Ventilsteuerung
- 23: Stellelement (Motor)
- 24: Kühlluftspalt

- 30: Nebenstromkanal
- 31: Lufteinlass
- 32: aerodynamische Verkleidungen

- 40: Gondel

- 50: Umgebungsbereich der Gondel

- L: Luft (Kühlluft abgezapft aus Nebenstrom)
- R: Rotationsachse

## Patentansprüche

1. Luftführungsvorrichtung in einem Flugzeugtriebwerk für Luft, die von einer Kerntriebwerkswandung (1), die ein Kerntriebwerk (10) umgibt, erhitzt ist,
**gekennzeichnet durch**
mindestens eine Luftsperrvorrichtung (3) zur Verhinderung einer axial nach vorne gerichteten Luftströmung im Raum (20) um das Kerntriebwerk (10) und zur Bildung eines Luftkanals (2), der sich mindestens über einen Teil im Raum (20) um das Kerntriebwerk (10) herum erstreckt, wobei sich die Luftsperrvorrichtung (3) und der Luftkanal (2) radial von der Kerntriebwerkswandung (1) nur über einen Teil des Raums (20) erstrecken, der das Kerntriebwerk (10) umgibt, und
mindestens eine Luftleitung (5, 5', 5") zu mindestens einer Austrittsöffnung (6), die in einen Bereich mündet, der einen lokal kleineren Druck aufweist als der Druck im Bereich eines Kühlluftspaltes (24) an der Kerntriebwerkswandung (1), wobei die mindestens eine Austrittsöffnung (6) der mindestens einen Luftleitung (5) unmittelbar in den Nebenstromkanal (30) mündet.

2. Luftführungsvorrichtung nach Anspruch 1, **dadurch gekennzeichnet, dass** der mindestens eine Luftkanal (2) als Ringkanal ausgebildet ist.

3. Luftführungsvorrichtung nach Anspruch 1 oder 2, **dadurch gekennzeichnet, dass** die mindestens eine Austrittsöffnung (6) der mindestens einen Luftleitung (5) mit mindestens einer Leitvorrichtung (7), insbesondere mindestens einem Leitbleich und / oder einer Düse, gekoppelt ist.

4. Luftführungsvorrichtung nach mindestens einem der vorhergehenden Ansprüche, **dadurch gekennzeichnet, dass** die mindestens eine Luftleitung (5) mindestens teilweise durch eine aerodynamische Verkleidung (32) zwischen dem Kerntriebwerk (10) und dem Nebenstromkanal (30) verläuft.

5. Luftführungsvorrichtung nach Anspruch 4, **dadurch gekennzeichnet, dass** die mindestens eine Austrittsöffnung (6) seitlich an der aerodynamischen Verkleidung (32), insbesondere an der Stelle mit der größten Breite der aerodynamischen Verkleidung (32), oder weiter stromabwärts angeordnet ist.

6. Luftführungsvorrichtung nach mindestens einem der vorhergehenden Ansprüche, **dadurch gekennzeichnet, dass** die mindestens eine Austrittsöffnung (6) der mindestens einen Luftleitung (5) unmittelbar in einen Umgebungsraum (50) des Flugzeugtriebwerks mündet.

7. Luftführungsvorrichtung nach mindestens einem der vorhergehenden Ansprüche, **dadurch gekennzeichnet, dass** die mindestens eine Austrittsöffnung (6) der mindestens einen Luftleitung (5) in den Bereich außerhalb der Austrittsdüse in Strömungsrichtung des Flugzeugtriebwerks mündet oder die mindestens eine Austrittsöffnung (6) der mindestens einen Luftleitung (5) in den Bereich der Austrittsfläche der aerodynamischen Verkleidung (32) des Flugzeugtriebwerks oder etwas darüber hinaus mündet.

8. Luftführungsvorrichtung nach mindestens einem der vorhergehenden Ansprüche, **dadurch gekennzeichnet, dass** mit mindestens zwei Luftleitungen (5) erhitzte Kühlluft von unterschiedlichen Bereichen der Kerntriebwerkswandung (1) abführbar ist.

9. Luftführungsvorrichtung nach mindestens einem der vorhergehenden Ansprüche, **dadurch gekennzeichnet, dass** in der mindestens einen Luftleitung (5) mindestens ein steuerbares Ventil (21) angeordnet ist.

10. Luftführungsvorrichtung nach Anspruch 9, **dadurch gekennzeichnet, dass** das steuerbare Ventil (21), eine Ventilsteuerung (22) und / oder ein Stellelement (23) im Bereich einer Gondel (40) des Flugzeugtriebwerkes angeordnet sind.

11. Luftführungsvorrichtung nach Anspruch 9 oder 10, **dadurch gekennzeichnet, dass** mittels des steuerbaren Ventils (21) die Kühlluftabfuhr von der Kerntriebwerkswandung (1) zur Einstellung der Größe eines Spaltes (11) zwischen Rotoren (12) und der Kerntriebwerkswandung (1) steuerbar oder regelbar ist.

12. Luftführungsvorrichtung nach mindestens einem der vorhergehenden Ansprüche, **dadurch gekennzeichnet, dass** die mindestens eine Luftsperrvorrichtung (3) aus einzelnen Segmenten gebildet ist.
